# EUROPEAN PATENT APPLICATION

(11) **EP 4 822 905 A1**
(43) Date of publication of application: **14.10.2026**
(21) Application number: 24899476.6
(22) Date of filing: 17.10.2024
(51) Int. Cl.: H01R 12/71, G02F 1/133

(54) **CIRCUIT BOARD CONNECTING STRUCTURE AND ELECTRICAL APPLIANCE**

(30) Priority: 08.12.2023 CN 202323366088 U
(71) Applicant: Shenzhen TCL Digital Technology Ltd., Shenzhen, Guangdong 518054 (CN)
(72) Inventor: TANG, Zhongzhi, Shenzhen, Guangdong 518054 (CN)
(74) Representative: Herrero & Asociados, S.L.
(86) International application number: PCT/CN2024/125531
(87) International publication number: WO 2025/118832

(57) **Abstract**

A circuit board connecting structure and an electrical appliance. The circuit board connecting structure comprises a circuit board and an adapter board. The circuit board is provided with a first connecting portion, and the adapter board is provided with a second connecting portion. One of the first connecting portion and the second connecting portion is a plug, and the other of the first connecting portion and the second connecting portion is a socket. The plug is inserted into the jack of the socket, so as to electrically connect the circuit board and the adapter board.

## Description

This application claims priority to Chinese Application No. 202323366088.2, entitled "CIRCUIT BOARD CONNECTING STRUCTURE AND ELECTRICAL APPLIANCE", filed to the China National Intellectual Property Administration on December 08, 2023. The entire disclosures of the above application are incorporated herein by reference.

### TECHNICAL FIELD

The present disclosure relates to a field of electronic devices, and more particularly, to a circuit board connecting structure and an electrical appliance.

### BACKGROUND

Mini-LED (mini light emitting diode) has been widely used in televisions. Mini-LED televisions have a large number of LEDs. A light board PCB (Printed Circuit Board) equipped with a large number of Mini-LEDs is placed inside a metal backplane of the television. However, a central control unit for controlling the Mini-LEDs is placed on the outside of the metal backplane for reasons such as heat dissipation and display timeliness.

### TECHNICAL PROBLEM

Currently, a socket is usually installed on the PCB, and an electrical connection between the PCB and a driver board of an external central control unit is achieved through a wire connection. This requires each PCB to be provided with a corresponding socket, and each socket needs to be connected to a connection line with a plug structure to connect to the external driver board. This results in a complex wiring configuration and a large amount of wire usage, leading to high production costs.

### SUMMARY

In a first aspect, an embodiment of the present disclosure provides a circuit board connecting structure, which includes:
a circuit board, provided with a first connecting portion;
an adapter board, provided with a second connecting portion;
wherein one of the first connecting portion and the second connecting portion is a plug, and the other is a socket, and the plug is inserted into a jack of the socket to electrically connect the circuit board to the adapter board.

In a second aspect, an embodiment of the present disclosure also provides an electrical appliance, which includes a circuit board connecting structure. The circuit board connecting structure includes:
a circuit board, provided with a first connecting portion;
an adapter board, provided with a second connecting portion;
wherein one of the first connecting portion and the second connecting portion is a plug, and the other is a socket, and the plug is inserted into a jack of the socket to electrically connect the circuit board to the adapter board.

### BENEFICIAL EFFECTS

In the circuit board connecting structure and the electrical appliance provided by the present disclosure, the first connecting portion is provided on the circuit board and the second connecting portion is provided on the adapter board. One of the first connecting portion and the second connecting portion is the plug, and the other is the socket. Through the plug-in connection between the plug and the socket, the circuit board could be pluggably connected to the adapter board to achieve an electrical connection. As a result, the use of wires is reduced, the layout of the circuit board is optimized, and the installation cost of the circuit board is reduced.

### BRIEF DESCRIPTION OF DRAWINGS

FIG. 1 is a first schematic structural diagram of a circuit board connecting structure provided by an embodiment of the present disclosure.
FIG. 2 is a second schematic structural diagram of a circuit board connecting structure provided by an embodiment of the present disclosure.
FIG. 3 is a third schematic structural diagram of a circuit board connecting structure provided by an embodiment of the present disclosure.
FIG. 4 is a first partial schematic structural diagram of an adjusting mechanism provided on a backplane provided by an embodiment of the present disclosure.
FIG. 5 is a second partial schematic structural diagram of an adjusting mechanism provided on a backplane provided by an embodiment of the present disclosure.

### DETAILED DESCRIPTION

The technical solutions in the embodiments of the present disclosure will be clearly and completely described below with reference to the accompanying drawings in the embodiments of the present disclosure. Clearly, the described embodiments are merely some of the embodiments of the present disclosure, rather than all of the embodiments. Based on the embodiments in the present disclosure, all other embodiments obtained by a person of ordinary skill in the art without creative efforts shall fall within the protection scope of the present disclosure.

In the description of the present disclosure, it should be understood that terms indicating orientation or positional relationships, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", etc., are based on the orientation or positional relationships shown in the accompanying drawings. These terms are used only to facilitate and simplify the description of the present disclosure, and do not indicate or imply that the apparatus or element referred to must have a specific orientation or be constructed and operated in a specific orientation. Therefore, they should not be construed as limitations on the present disclosure. In addition, the terms "first" and "second" are used for descriptive purposes only and cannot be understood as indicating or implying relative importance or implicitly indicating the number of technical features indicated. Thus, a feature defined with "first" or "second" may explicitly or implicitly include one or more of the feature. In the description of the present disclosure, "a plurality of" means two or more, unless otherwise explicitly and specifically limited.

In the description of the present disclosure, it should be noted that unless otherwise explicitly specified and limited, the terms "install", "connect", and "couple" should be understood in a broad sense. For example, a connection may be a fixed connection, a detachable connection, or an integrated connection; it may be a mechanical connection, an electrical connection, or allow for communication with each other; it may be a direct connection, an indirect connection through an intermediary, an internal communication between two elements, or an interaction between two elements. For a person of ordinary skill in the art, the specific meanings of the above terms in the present disclosure can be understood according to specific situations.

In the present disclosure, unless otherwise explicitly specified and limited, a first feature being "on" or "under" a second feature may include direct contact between the first and second features, or it may include indirect contact between the first and second features through another feature between them. Moreover, a first feature being "above", "over", and "on top of" a second feature includes the first feature being directly above or obliquely above the second feature, or simply indicates that the horizontal height of the first feature is greater than that of the second feature. A first feature being "below", "under", and "beneath" a second feature includes the first feature being directly below or obliquely below the second feature, or simply indicates that the horizontal height of the first feature is less than that of the second feature.

The following disclosure provides many different embodiments or examples for implementing different structures of the present disclosure. To simplify the disclosure of the present disclosure, the components and settings of specific examples are described below. Of course, they are merely examples and are not intended to limit the present disclosure. In addition, the present disclosure may repeat reference numerals and/or reference letters in different examples. This repetition is for the purpose of simplification and clarity and does not in itself indicate a relationship between the various embodiments and/or settings discussed. Furthermore, the present disclosure provides examples of various specific processes and materials, but a person of ordinary skill in the art may be aware of the application of other processes and/or the use of other materials.

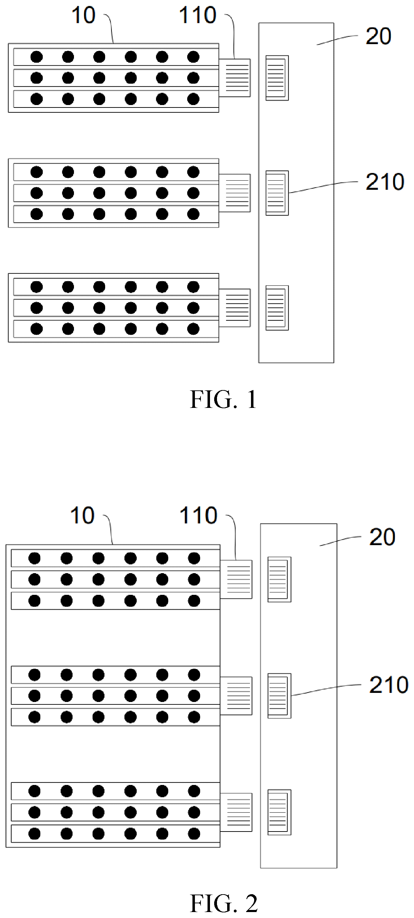

Specifically, referring to FIG. 1 to FIG. 5, an embodiment of the present disclosure provides a circuit board connecting structure. The circuit board connecting structure includes a circuit board 10 and an adapter board 20. The circuit board 10 is provided with a first connecting portion 110, and the adapter board 20 is provided with a second connecting portion 210. One of the first connecting portion 110 and the second connecting portion 210 is a plug, and the other is a socket. The plug is inserted into a jack of the socket to electrically connect the circuit board 10 to the adapter board 20.

In this embodiment, the first connecting portion 110 is provided on the circuit board 10 and the second connecting portion 210 is provided on the adapter board 20. One of the first connecting portion 110 and the second connecting portion 210 is the plug, and the other is the socket. Through the plug-in connection between the plug and the socket, the circuit board 10 could be pluggably connected to the adapter board 20 to achieve an electrical connection. As a result, the use of wires is reduced, the layout of the circuit board 10 is optimized, and the installation cost of the circuit board 10 is reduced.

The circuit board connecting structure is particularly suitable for use in a television, in which the circuit board 10 corresponds to a light board. As shown in FIG. 1 to FIG. 3, LEDs could be mounted on the circuit board 10. The LEDs could be arranged as one row or as multiple rows at intervals according to requirements, and each row can be provided with one LED or multiple LEDs at intervals. Both the circuit board 10 and the adapter board 20 are installed inside a backplane 30 of the television, while a central control unit is disposed on the outside of the backplane 30 of the television. In this configuration, an electrical connection between the internal circuit board 10 and the external central control unit could be achieved via the adapter board 20 using a single connection line. As a result, the use of wires could be reduced, and design and production costs could be lowered.

The circuit board 10 could be configured in various shapes, such as rectangular, square, strip-shaped, comb-shaped, or harpoon-shaped, provided that the circuit board 10 could be connected to the adapter board 20 through the cooperation of the first connecting portion 110 and the second connecting portion 210.

The plug could be configured in a form of pads with an exposed copper material on its outer surface, so that an electrical connection is formed with the socket when the plug is inserted into the jack of the socket. The socket could include a base, terminals, and solder tabs, and the terminals and the solder tabs are fixed to the adapter board 20 by a tin-plating process.

For example, as shown in FIG. 1, the first connecting portion 110 is a plug, and the second connecting portion 210 is a socket. That is, a plug is provided on the circuit board 10, and a socket is provided on the adapter board 20. The electrical connection between the circuit board 10 and the adapter board 20 is achieved through the plug-in connection between the plug and the socket. In this embodiment, the plug is integrally formed on the circuit board 10. Since the plug is integrally formed on the circuit board 10, no other connecting structures need to be provided on the circuit board 10. The process of integrally forming exposed copper material as the plug on each circuit board 10 during the forming stage is relatively simple. Therefore, compared to providing a socket on the circuit board 10, the integrally formed plug structure could further reduce costs and simplify the production process.

For example, the first connecting portion 110 is a socket, and the second connecting portion 210 is a plug. That is, a socket is provided on the circuit board 10, and a plug is provided on the adapter board 20. The electrical connection between the circuit board 10 and the adapter board 20 is achieved through the plug-in connection between the plug and the socket.

In some embodiments, the socket is provided with a locking member configured to connect to the plug to lock the plug to the socket. The locking member is used to lock the plug, thereby reliably fixing the plug to the socket and preventing connection separation between the circuit board 10 and the adapter board 20.

For example, the locking member could be a plastic buckle. The plastic buckle snaps the plug into the jack of the socket to achieve reliable fixation between the plug and the socket, preventing connection separation between the circuit board 10 and the adapter board 20.

For example, the locking member could be a solder layer. After the plug is inserted into the jack of the socket, the plug and the socket are further fixed by tin soldering to achieve a reliable connection between them and prevent connection separation between the circuit board 10 and the adapter board 20.

For example, the locking member could be an elastic pressing piece disposed in the jack. After the plug is inserted into the jack of the socket, the elastic pressing piece presses against the plug to reliably fix the plug to the socket, preventing connection separation between the circuit board 10 and the adapter board 20.

For example, the locking member could be a fastener such as a screw. In this case, both the socket and the plug are provided with threaded holes. The fastener passes through the threaded hole of the socket and the threaded hole of the plug to reliably fix the plug to the socket, preventing connection separation between the circuit board 10 and the adapter board 20.

As shown in FIG. 2, in some embodiments, the circuit board 10 is provided with at least two first connecting portions 110. A reasonable layout of the spacing between the first connecting portions 110 allows the circuit board 10 to have a suitable size and facilitates the plug-in connection between the circuit board 10 and the adapter board 20.

A number of the first connecting portions 110 matches a number of the second connecting portions 210. The number of the first connecting portions 110 and second connecting portions 210 could be selected based on a number and distribution of LEDs on the circuit board 10.

As shown in FIG. 1, in some embodiments, each circuit board 10 could be provided with only one first connecting portion 110, and a plurality of circuit boards 10 are provided. Correspondingly, a number of the second connecting portions 210 matching the number of circuit boards 10 are provided on the adapter board 20. For example, when there are three circuit boards 10, three corresponding second connecting portions 210 are provided on the adapter board 20.

In some embodiments, the plug is provided with at least two spaced-apart conductive portions extending toward the socket, wherein a distance between each two adjacent conductive portions is 1 millimeter to 2 millimeters.

The conductive portions could be understood as connection pins or gold fingers on the plug, used for achieving an electrical connection between the plug and the socket after insertion. Setting the distance between two adjacent conductive portions to 1 millimeter to 2 millimeters could ensure the reliability of the signal connection between the plug and the socket, as well as the reliability of short-circuit and electrostatic tests. For example, the distance between two adjacent conductive portions could be 1 millimeter, 2 millimeters, or any value in between.

The plug is further provided with an insulating portion between each two adjacent conductive portions. The insulating portion serves to insulate the two adjacent conductive portions to prevent short circuits. A width of the insulating portion corresponds to the distance between the two adjacent conductive portions.

In some embodiments, a protective layer is provided on an outer surface of each of the conductive portions to protect the conductive portions. Specifically, the protective layer could be formed on the outer surface of the conductive portions by electroplating. For example, the protective layer could be a tin-plated layer or a gold-plated layer, which could prevent adverse effects such as rusting caused by oxidation, moisture absorption, and salt spray. Alternatively, the protective layer could also be formed on the outer surface of the conductive portions by coating, spraying, or the like, provided that the protective layer could provide a protective effect.

When a tin-plated layer or a gold-plated layer is used as the protective layer, no protective layer is provided on the outer surface of the insulating portion to prevent the insulating portion from conducting electricity.

In some embodiments, the circuit board connecting structure further includes a backplane 30. The backplane 30 is provided with a first connection hole. The second connecting portion 210 is a socket, and the socket is provided with a second connection hole. A fastener passes through the first connection hole and the second connection hole to connect the backplane 30 and the socket.

An alignment of the first connection hole and the second connection hole allows for precise fixation of the socket on the backplane 30, thereby enabling the adapter board 20 to be accurately installed on the backplane 30. Moreover, because the fastener passes through the first connection hole and the second connection hole, assembly and disassembly of the socket and the backplane 30 are very convenient. The fastener could be a screw or the like.

By providing the circuit board connecting structure on the backplane 30, it could be applied in a television and installed inside the television.

In some embodiments, the backplane 30 is provided with a positioning mechanism configured to allow the circuit board 10 to be inserted and positioned for connection with the adapter board 20.

The positioning mechanism could provide positioning and sliding guidance for the circuit board 10, allowing the circuit board 10 to be first pre-positioned by the positioning mechanism and then to slide along the positioning mechanism for installation on the adapter board 20. Since the adapter board 20 is first accurately positioned and installed on the backplane 30, the subsequent pre-positioning and guided installation via the positioning mechanism ensure that the circuit board 10 and the adapter board 20 could be accurately plugged together, making the installation of the circuit board 10 more convenient and faster.

The positioning mechanism could extend in the direction of the adapter board 20, thereby enabling the circuit board 10 to gradually approach the adapter board 20 when sliding along the positioning mechanism. For example, the positioning mechanism is a sliding groove, and the circuit board 10 is slidably mounted in the sliding groove. The adapter board 20 is located at an edge on one side of the sliding groove, thereby allowing the circuit board 10 to be plugged into the adapter board 20 after sliding along the sliding groove.

For example, the positioning mechanism includes two spaced-apart positioning posts. The circuit board 10 has two strip-shaped notches. The two strip-shaped notches could be respectively engaged with the two positioning posts and guide the sliding of the circuit board 10 based on the extension direction of the strip-shaped notches. The circuit board 10 could be plugged into the adapter board 20 after sliding along the positioning posts.

For example, the positioning mechanism includes two spaced-apart limiting posts. A distance between the two limiting posts corresponds to a width of the circuit board 10, and both limiting posts extend in the direction of the adapter board 20. The circuit board 10 is pre-positioned and installed between the two limiting posts and then slid in the direction of the adapter board 20, so that the circuit board 10 could be plugged into the adapter board 20 after sliding.

In some embodiments, the backplane 30 is provided with an adjusting mechanism 40. The adjusting mechanism 40 is configured to abut against the circuit board 10, or the adjusting mechanism 40 is configured to connect to the adapter board 20 to cause the circuit board 10 to abut against the backplane 30.

It is to be understood that since a socket is provided on the adapter board 20, the socket could only be located on a side of the adapter board 20. When the plug of the circuit board 10 is inserted into the socket, a height difference will exist between the circuit board 10 and the adapter board 20. This height difference may cause a gap to gradually appear between the circuit board 10 and the backplane 30, leading to damage to the circuit board 10 due to stress. The provision of the adjusting mechanism 40 could compensate for the height difference caused by the plug-in assembly of the circuit board 10 and the adapter board 20, ensuring the flatness of the installation of the circuit board 10 and the reliable installation of the circuit board 10 on the backplane 30.

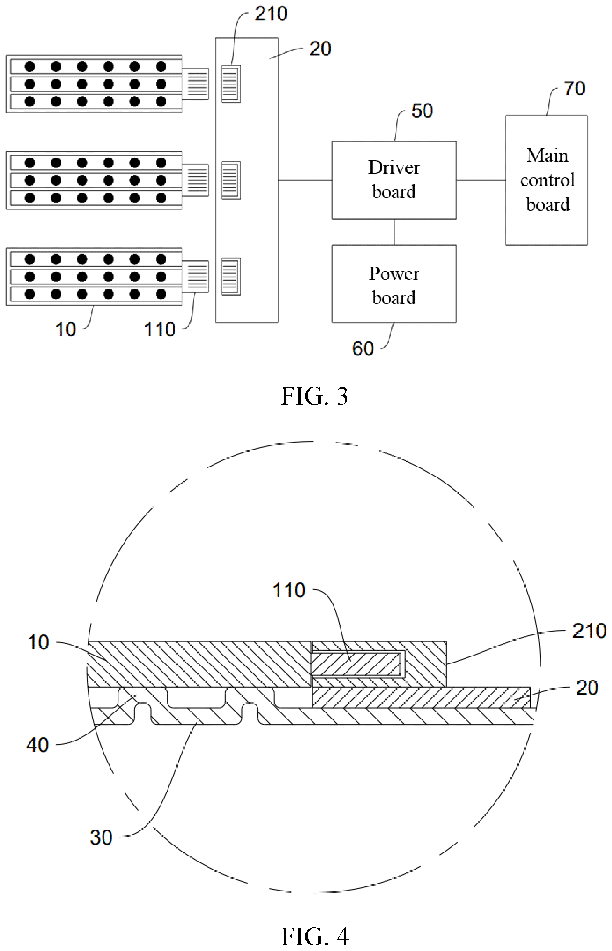

As shown in FIG. 4, in some embodiments, the adjusting mechanism 40 may be a protruding portion provided on the backplane 30. The structure of the protruding portion allows it to abut against the circuit board 10 to support the circuit board 10, compensate for the height difference caused by the plug-in assembly of the circuit board 10 and the adapter board 20, ensure the flatness of the installation of the circuit board 10, and prevent the circuit board 10 from being damaged. Additionally, the circuit board 10 could be bonded to the protruding portion via an adhesive layer to ensure a reliable connection between the circuit board 10 and the backplane 30. The adhesive layer could be glue or the like.

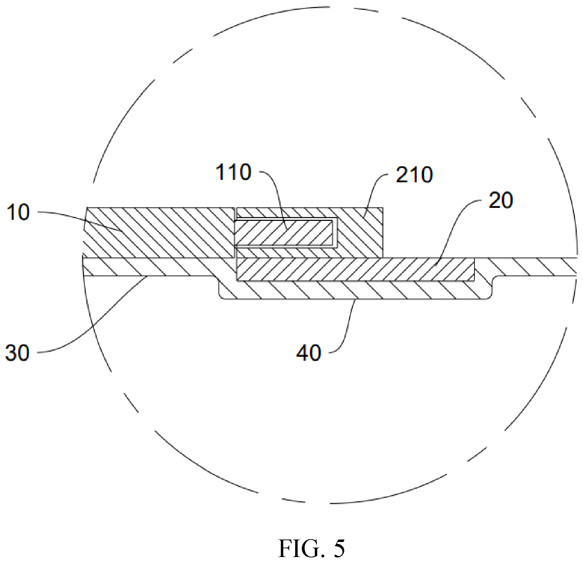

As shown in FIG. 5, in some embodiments, the adjusting mechanism 40 may be a recessed portion provided on the backplane 30. The structure of the recessed portion allows it to accommodate the adapter board 20, so that the circuit board 10 could directly abut against the backplane 30. This compensates for the height difference caused by the plug-in assembly of the circuit board 10 and the adapter board 20, ensures the flatness of the installation of the circuit board 10, and prevents the circuit board 10 from being damaged. Additionally, the circuit board 10 could be bonded to the backplane 30 via an adhesive layer to ensure a reliable connection between the circuit board 10 and the backplane 30. The adhesive layer could be glue or the like.

In some embodiments, the circuit board connecting structure further includes a central control unit installed on a side of the backplane 30 facing away from the circuit board 10. As shown in FIG. 3, the central control unit includes a driver board 50, a power board 60, and a main control board 70. The power board 60 is electrically connected to the driver board 50. The main control board 70 is electrically connected to the driver board 50. The backplane 30 is provided with a through hole, and a connection line passes through the through hole. The connection line is configured to connect the adapter board 20 and the driver board 50, so as to electrically connect the adapter board 20 to the central control unit.

The power board 60 and the main control board 70 are electrically connected to the driver board 50 to obtain power input and signal communication. The main control board 70 is connected to the adapter board 20 through the connection line, thereby providing power and signals to the circuit board 10. The connection line passes through the through hole on the backplane 30, so that the circuit board 10 and the adapter board 20 located on an inner side of the backplane 30 could be electrically connected to the central control unit located on an outer side of the backplane 30.

In the circuit board connecting structure of this embodiment, the circuit board 10 is connected to the adapter board 20 via a plug-in connection, and the adapter board 20 could be electrically connected to the external central control unit with only one connection line. Thus, the wiring between the central control unit and the circuit board 10 is simplified, the amount of wires used is reduced, and there is no need to consider wiring and routing methods, thereby reducing design and production costs.

An embodiment of the present disclosure also provides an electrical appliance, including the circuit board connecting structure in the foregoing embodiments. The electrical appliance includes, in particular, display appliances such as televisions, as well as other household or commercial appliances with display functions.

In this embodiment, a first connecting portion 110 is provided on the circuit board 10, and a second connecting portion 210 is provided on the adapter board 20. One of the first connecting portion 110 and the second connecting portion 210 is a plug, and the other is a socket. Through the plug-in connection between the plug and the socket, the circuit board 10 could be pluggably connected to the adapter board 20 to achieve an electrical connection. Thus, the use of wires is reduced, the layout of the circuit board 10 is optimized, and the installation cost of the circuit board 10 is saved.

Based on the application of this circuit board connecting structure in televisions, for television products with fewer than 1000 dimming zones, a cost saving of 10 to 20 yuan per unit could be achieved.

In the foregoing embodiments, the descriptions of the various embodiments each have their own emphasis. For parts not described in detail in a certain embodiment, reference may be made to the relevant descriptions in other embodiments.

The circuit board connecting structure and the electrical appliance provided by the embodiments of the present disclosure have been described in detail above. In this specification, specific examples are used to illustrate the principles and implementation manners of the present disclosure. The description of the above embodiments is only for the purpose of facilitating the understanding of the technical solution of the present disclosure and its core ideas. A person of ordinary skill in the art should understand that the technical solutions described in the foregoing embodiments can still be modified, or some of the technical features therein can be equivalently replaced. Such modifications or replacements do not cause the essence of the corresponding technical solutions to depart from the scope of the technical solutions of the embodiments of the present disclosure.

## Claims

1. A circuit board connecting structure, comprising:
a circuit board provided with a first connecting portion; and
an adapter board provided with a second connecting portion;
wherein one of the first connecting portion and the second connecting portion is a plug and the other is a socket, and wherein the plug is inserted into a jack of the socket to electrically connect the circuit board to the adapter board.

2. The circuit board connecting structure according to claim 1, wherein the socket is provided with a locking member, and the locking member is configured to connect to the plug and lock the plug to the socket.

3. The circuit board connecting structure according to claim 2, wherein the locking member is a plastic buckle.

4. The circuit board connecting structure according to claim 2, wherein the locking member is an elastic pressing piece disposed in the jack.

5. The circuit board connecting structure according to claim 1, wherein the plug is provided with at least two spaced-apart conductive portions, the conductive portions extending toward the socket.

6. The circuit board connecting structure according to claim 5, wherein a distance between each two adjacent conductive portions is 1 millimeter to 2 millimeters.

7. The circuit board connecting structure according to claim 5, wherein an insulating portion is further provided between each two adjacent conductive portions.

8. The circuit board connecting structure according to claim 5, wherein an outer surface of each of the conductive portions is provided with a protective layer.

9. The circuit board connecting structure according to claim 8, wherein the protective layer is a tin-plated layer or a gold-plated layer.

10. The circuit board connecting structure according to claim 1, wherein the first connecting portion is the plug, the plug being integrally formed on the circuit board.

11. The circuit board connecting structure according to claim 1, further comprising:
a backplane provided with a first connection hole;
wherein the second connecting portion is the socket, the socket is provided with a second connection hole; and
a fastener passing through the first connection hole and the second connection hole to connect the backplane and the socket.

12. The circuit board connecting structure according to claim 11, wherein the backplane is provided with a positioning mechanism, the positioning mechanism being configured for the circuit board to be inserted and positioned for connection with the adapter board.

13. The circuit board connecting structure according to claim 12, wherein the circuit board connecting structure further comprises a central control unit installed on a side of the backplane away from the circuit board, wherein the central control unit comprising:
a driver board;
a power board electrically connected to the driver board; and
a main control board electrically connected to the driver board;
wherein the backplane is provided with a through hole through which a connection line passes, the connection line being configured to connect the adapter board and the driver board to electrically connect the adapter board to the central control unit.

14. The circuit board connecting structure according to claim 12, wherein the positioning mechanism is a sliding groove, the positioning mechanism extending in a direction toward the adapter board.

15. The circuit board connecting structure according to claim 12, wherein the positioning mechanism comprises two spaced-apart positioning posts; the circuit board has two strip-shaped notches, and the two strip-shaped notches are respectively snapped into the two positioning posts.

16. The circuit board connecting structure according to claim 12, wherein the positioning mechanism comprises two spaced-apart limiting posts; a distance between the two limiting posts corresponds to a width of the circuit board; and the two limiting posts both extend in a direction toward the adapter board.

17. The circuit board connecting structure according to claim 11, wherein the backplane is provided with an adjusting mechanism, the adjusting mechanism being configured to abut against the circuit board.

18. The circuit board connecting structure according to claim 17, wherein the adjusting mechanism is a recessed portion.

19. The circuit board connecting structure according to claim 17, wherein the adjusting mechanism is configured to connect to the adapter board to cause the circuit board to abut against the backplane.

20. An electrical appliance, comprising a circuit board connecting structure, the circuit board connecting structure comprising:
a circuit board provided with a first connecting portion; and
an adapter board provided with a second connecting portion;
wherein one of the first connecting portion and the second connecting portion is a plug and the other is a socket, and wherein the plug is inserted into a jack of the socket to electrically connect the circuit board to the adapter board.
